# EUROPEAN PATENT SPECIFICATION

(11) **EP 2 118 459 B1**
(45) Date of publication and mention of the grant of the patent: **25.04.2012**
(21) Application number: 08719231.6
(22) Date of filing: 05.03.2008
(51) Int. Cl.: F01N 3/10, F01N 11/00

(54) **CATALYST MONITORING SYSTEM AND CATALYST MONITORING METHOD**
KATALYSATORÜBERWACHUNGSSYSTEM UND KATALYSATORÜBERWACHUNGSVERFAHREN
SYSTÈME DE SURVEILLANCE D'UN CATALYSEUR ET PROCÉDÉ DE SURVEILLANCE D'UN CATALYSEUR

(30) Priority: 06.03.2007 JP 2007056044
(43) Date of publication of application: 18.11.2009
(73) Proprietor: Toyota Jidosha Kabushiki Kaisha, Toyota-shi, Aichi-ken 471-8571 (JP)
(72) Inventor: KITAURA, Koichi, Toyota-shi Aichi-ken 471-8571 (JP); KIDOKORO, Toru, Toyota-shi Aichi-ken 471-8571 (JP); SAWADA, Hiroshi, Toyota-shi Aichi-ken 471-8571 (JP); IWAZAKI, Yasushi, Toyota-shi Aichi-ken 471-8571 (JP); KIMURA, Koichi, Toyota-shi Aichi-ken 471-8571 (JP)
(74) Representative: TBK
(86) International application number: PCT/IB2008/000511
(87) International publication number: WO 2008/107779

(56) References cited:
- EP-A- 0 727 568
- WO-A-98/48152
- US-A- 5 179 833
- US-A- 5 816 231
- US-A1- 2002 124 552

## Description

### BACKGROUND OF THE INVENTION

### 1. Field of the Invention

The invention relates to a system and a method for monitoring deterioration of a catalyst disposed in an exhaust passageway of an internal combustion engine.

### 2. Description of the Related Art

Generally, in internal combustion engines, a catalyst is disposed in an exhaust passageway in order to purify the exhaust gas. For example, a three-way catalyst mounted on a spark ignition type engine has an O₂ storage function. By this O₂ storage function, the catalyst absorbs excess oxygen present in the exhaust gas when the air-fuel ratio of the exhaust gas flowing into the catalyst becomes greater (fuel-leaner) than the stoichiometric air-fuel ratio. On the other hand, when the air-fuel ratio of the exhaust gas flowing into the catalyst becomes smaller (fuel-richer) than the stoichiometric air-fuel ratio, the catalyst releases oxygen that it has absorbed. Therefore, if during a normal operation of the internal combustion engine, the air-fuel ratio of the mixture gas shifts to the rich side or the lean side of the stoichiometric air-fuel ratio depending on the operating condition of the engine, the stoichiometric air-fuel ratio is maintained on a surface of the catalyst. Due to the O₂ storage function of the three-way catalyst, when the mixture gas becomes lean, the excess oxygen is adsorbed and retained to the catalyst, involving the reduction of nitrogen oxides (NOx). When the mixture becomes rich, oxygen adsorbed and retained in the catalyst is released therefrom, resulting in the oxidation of hydrocarbons (HC) and carbon monoxide (CO). Thus, NOx, HC and CO may be removed by the three-way catalyst.

If the three-way catalyst deteriorates, the exhaust gas purification rate declines. The degree of deterioration of the three-way catalyst and the degree of decline of the O₂ storage function have a correlation since the deterioration of the three-way catalyst and the decline of the O₂ storage function are both reactions that occur over a noble metal. Hence, it is a common practice to detect the deterioration of the three-way catalyst by detecting the degree of decline of the O₂ storage function of the catalyst.

Besides this method, Japanese Patent No. 2705039 discloses a technology in which two HC sensors that detect the HC concentration in exhaust gas are provided on the upstream side and the downstream side of a three-way catalyst, and deterioration of the three-way catalyst is detected by comparing outputs of the two HC sensors.

In recent years, as the motor vehicle exhaust emission control is tightened, the exhaust gas purification rate of the catalyst as a criterion for determining that the catalyst has been deteriorated is becoming higher. That is, it needs to be determined that the catalyst has been deteriorated, while the degree of deterioration of the catalyst is relatively small. Therefore, the differences between the concentrations of the object components (NOx, HC, CO) in the exhaust gas flowing into the catalyst (i.e., the concentrations thereof prior to the inflow to the catalyst) and the concentrations of the object components in the exhaust gas flowing out of the catalyst (i.e., the concentrations thereof subsequent to the inflow to the catalyst) are increasing.

For example, in the case where HC is an object component, the pre-catalyst HC concentration is 1000 ppm or higher whereas the post-catalyst HC concentration is at a level of several ten ppm. In this case, there is a great difference of two orders of magnitude between the pre-catalyst and post-catalyst concentrations, which is a value of ninety several percents in terms of HC removal rate.

In the technology described in Japanese Patent No. 2705039, the pre-catalyst and post-catalyst HC concentrations are merely compared. The HC concentration herein refers to a total concentration of a plurality of components that constitute the HCs. That is, the foregoing pre-catalyst HC concentration of 1000 ppm or higher and the post-catalyst HC concentration of several ten ppm are the HC concentrations herein. Between the normal state and a deteriorated state of the catalyst, the post-catalyst HC concentration differs merely by about several ten ppm, and the HC removal rate also differs merely by about several percents. If identical HC sensors are used before and after the catalyst, the HC sensors need to have a wider measurement range of 1000 ppm or greater that corresponds to the pre-catalyst HC concentration, and at the same time, need to measure the post-catalyst HC concentration that is as small as several ten ppm. More specifically, in the technology described in Japanese Patent No. 2705039, the total concentration of all of a plurality of diverse components is detected. Therefore, it is necessary to use a sensor that has a wide measurement range that corresponds to the total concentration of all the components, and to discriminate the magnitude of the post-catalyst hydrocarbon concentration that is at a low level, and to determine whether the catalyst has been deteriorated. Then, the measurement error regarding the post-catalyst HC concentration may become large, and the HC removal rate calculated therefrom may become a value that contains a large error. If the normality/deterioration of the catalyst is determined on the basis of an about several-percent change in the HC removal rate that contains such a large error, high monitoring accuracy (high detection accuracy) may not be secured. Similar systems are described in the documents WO98/48152 and US 2002/0124552.

### SUMMARY OF THE INVENTION

Accordingly the invention provides a catalyst monitoring system according to claim 1 and a catalyst monitoring method according to claim 9 that are capable of highly accurately monitoring deterioration of a catalyst.

A catalyst monitoring system in accordance with a first aspect of the invention includes: a catalyst provided in an exhaust passageway of an internal combustion engine and being capable of removing at least hydrocarbon in an exhaust gas flowing into the catalyst; first concentration detection means for detecting or estimating a concentration of a portion of components in the hydrocarbon in the exhaust gas flowing into the catalyst; second concentration detection means for detecting a concentration of the portion of components in the hydrocarbon in the exhaust gas flowing out of the catalyst; and deterioration determination means for determining whether the catalyst has been deteriorated based on the concentration of the portion of components in the hydrocarbon flowing into the catalyst and the concentration of the portion of components in the hydrocarbon flowing out of the catalyst.

The hydrocarbon in exhaust gas includes a plurality of diverse components. In the foregoing aspect of the invention, the object component is limited to a portion of components in the hydrocarbon in the exhaust gas beforehand. Hence, the pre-catalyst component concentration may be decreased, and the required measurement range may also be decreased, so that different post-catalyst concentrations that are at a low level may be discriminated with high accuracy. As a result, it becomes possible to secure high monitoring accuracy.

In the catalyst monitoring system in accordance with the first aspect, the portion of components in the hydrocarbon in the exhaust gas is a component whose carbon number is small.

Furthermore, in the catalyst monitoring system in accordance with the first aspect, the portion of components in the hydrocarbon in the exhaust gas includes at least one of methane, ethane and propane.

The constituent components of the hydrocarbons in exhaust gas are more unstable the greater their carbon numbers are. As for the constituent components of the hydrocarbons that flow into the catalyst, it is considered that those with greater carbon numbers more quickly decompose to undergo oxidation, via the reaction with the catalyst, and thus be removed (disappear). Conversely, it is considered that hydrocarbon components with smaller carbon numbers are more stable, and are less easily removed during the passage through the catalyst. In other words, as for the hydrocarbon components with small carbon numbers, their removal rate is likely to be dependent on the degree of deterioration of the catalyst, and more strongly tends to exhibit a clear difference between the fresh state and the deteriorated state of the catalyst. Therefore, by selecting, as one or more object hydrocarbon components, a portion whose carbon number is small, such as at least one of methane, ethane and propane, it becomes possible to suitably appreciate the degree of deterioration of the catalyst.

In the catalyst monitoring system in accordance with the first aspect, the portion of components in the hydrocarbon in the exhaust gas may be methane.

Of the constituent components of the hydrocarbon in exhaust gas, methane has the least carbon number and is the most stable, so that the removal rate thereof most significantly reflects the degree of deterioration of the catalyst. Hence, in the case where the object hydrocarbon component is limited to methane as in the foregoing aspect, the monitoring may be performed with higher accuracy.

Furthermore, in the catalyst monitoring system in accordance with the first aspect, the first concentration detection means may include methane concentration estimation means for estimating a methane concentration in the exhaust gas flowing into the catalyst based on an operation state of the internal combustion engine; and the second concentration detection means may include a methane sensor.

Furthermore, in the catalyst monitoring system in accordance with the first aspect, the operation state of the internal combustion engine may be at least one of rotation speed, intake air amount, and cooling water temperature.

Furthermore, in the catalyst monitoring system in accordance with the first aspect, the first detection means and the second detection means may include a methane sensor.

Furthermore, in the catalyst monitoring system in accordance with the first aspect, the deterioration determination means may calculate a removal rate of the portion of components in the hydrocarbon in the exhaust gas flowing into the catalyst based on the concentration of the portion of components in the hydrocarbon in the exhaust gas flowing into the catalyst and the concentration of the portion of components in the hydrocarbon in the exhaust gas flowing out of the catalyst, and determines whether the catalyst has been deteriorated based on the removal rate.

Furthermore, in the catalyst monitoring system in accordance with the first aspect, the deterioration determination means may compare the removal rate with a deterioration criterion value that is obtained from a function with temperature of the catalyst, and determines that the catalyst has been deteriorated if the removal rate is less than or equal to the deterioration criterion value.

Furthermore, the catalyst monitoring system in accordance with the first aspect may further include air-fuel ratio control means for controlling air-fuel ratio of the exhaust gas flowing into the catalyst to a predetermined air-fuel ratio when the concentration of the portion of components in the hydrocarbon is detected or estimated by the first concentration detection means and when the concentration of the portion of components in the hydrocarbon is detected by the second concentration detection means.

Furthermore, in the catalyst monitoring system in accordance with the first aspect, a value of the predetermined air-fuel ratio may be selected from a predetermined width range within a lean side and a rich side with respect to a reference value that is deviated from a stoichiometric air-fuel ratio to the lean side.

Furthermore, in the catalyst monitoring system in accordance with the first aspect, the reference value may be 14.7.

Furthermore, in the catalyst monitoring system in accordance with the first aspect, a value of the predetermined air-fuel ratio may be selected from a range that is above 14.6 and up to 14.8.

Furthermore, in the catalyst monitoring system in accordance with the first aspect, the predetermined air-fuel ratio may have a value that is deviated from a stoichiometric air-fuel ratio to the lean side.

Furthermore, the catalyst monitoring system in accordance with the first aspect may further include a downstream catalyst provided on a downstream side of the catalyst and being capable of removing at least NOx in the exhaust gas flowing into the downstream catalyst, and the air-fuel ratio control means may execute the air-fuel ratio control on condition that the downstream catalyst be in a state of being able to remove NOx.

Furthermore, the catalyst monitoring system in accordance with the first aspect may further include catalyst temperature detection means for detecting or estimating temperature of the catalyst, and the catalyst monitoring may be executed if a condition that a cooling water temperature be higher than or equal to a predetermined value, a condition that a value of an intake air amount be within a predetermined fluctuation width, and a condition that the catalyst be in a predetermined active temperature range are satisfied.

Furthermore, in the catalyst monitoring system in accordance with the first aspect, the catalyst may be a three-way catalyst.

A catalyst monitoring method in accordance with a second aspect of the invention is a catalyst monitoring method of determining whether a catalyst provided in an exhaust passageway of an internal combustion engine and being capable of removing at least hydrocarbon in an exhaust gas flowing into the catalyst has been deteriorated, and includes: detecting or estimating a concentration of a portion of components in the hydrocarbon in the exhaust gas flowing into the catalyst; detecting a concentration of the portion of components in the hydrocarbon in the exhaust gas flowing out of the catalyst; and determining whether the catalyst has been deteriorated based on the concentration of the portion of components in the hydrocarbon flowing into the catalyst and the concentration of the portion of components in the hydrocarbon flowing out of the catalyst.

Furthermore, in the catalyst monitoring method in accordance with the second aspect, the portion of components in the hydrocarbon in the exhaust gas is a component whose carbon number is small.

Furthermore, in the catalyst monitoring method in accordance with the second aspect, the portion of components in the hydrocarbon in the exhaust gas includes at least one of methane, ethane and propane.

Furthermore, in the catalyst monitoring method in accordance with the second aspect, the portion of components in the hydrocarbon in the exhaust gas may be methane.

Furthermore, in the catalyst monitoring method in accordance with the second aspect, a methane concentration in the exhaust gas flowing into the catalyst may be estimated based on an operation state of the internal combustion engine; and a methane concentration in the exhaust gas flowing out of the catalyst may be detected by a methane sensor.

Furthermore, in the catalyst monitoring method in accordance with the second aspect, a methane concentration in the exhaust gas flowing into the catalyst may be detected by a methane sensor, and a methane concentration in the exhaust gas flowing out of the catalyst may be detected by a methane sensor.

Furthermore, in the catalyst monitoring method in accordance with the second aspect, a removal rate of the portion of components in the hydrocarbon flowing into the catalyst may be calculated based on the concentration of the portion of components in the hydrocarbon flowing into the catalyst and the concentration of the portion of components in the hydrocarbon flowing out of the catalyst, and it may be determined whether the catalyst has been deteriorated based on the removal rate.

Furthermore, the catalyst monitoring method in accordance with the second aspect may further include controlling air-fuel ratio of the exhaust gas flowing into the catalyst to a predetermined air-fuel ratio when the concentration of the portion of components in the hydrocarbon flowing into the catalyst is to be detected or estimated and when the concentration of the portion of components in the hydrocarbon flowing out the catalyst is to be detected.

Furthermore, in the catalyst monitoring method in accordance with the second aspect, a value of the predetermined air-fuel ratio may be selected from a predetermined width range within a lean side and a rich side with respect to a reference value that is deviated from a stoichiometric air-fuel ratio to the lean side.

Furthermore, in the catalyst monitoring method in accordance with the second aspect, the predetermined air-fuel ratio may have a value that is deviated from a stoichiometric air-fuel ratio to the lean side.

Furthermore, the catalyst monitoring method in accordance with the second aspect may further include providing a downstream catalyst that is disposed on a downstream side of the catalyst and is capable of removing at least NOx in the exhaust gas flowing into the downstream catalyst, and the control of the air-fuel ratio may be executed on condition that the downstream catalyst be in a state of being able to remove NOx.

Furthermore, in the catalyst monitoring method in accordance with the second aspect, the catalyst may be a three-way catalyst.

Thus, according to the invention, there may be achieved an excellent effect of being able to providing a catalyst monitoring system and a catalyst monitoring method in which deterioration of a catalyst may be monitored with high accuracy.

### BRIEF DESCRIPTION OF THE DRAWING

The foregoing and/or further objects, features and advantages of the invention will become more apparent from the following description of preferred embodiment with reference to the accompanying drawings, in which like numerals are used to represent like elements and wherein:
FIG 1 is a schematic system diagram of an internal combustion engine in accordance with a first embodiment of the invention;
FIG. 2 is a schematic sectional view showing a construction of a catalyst in accordance with the first embodiment of the invention;
FIGS. 3A to 3D show results of a test in which the concentrations of HC components in exhaust gas were compared between the case of a normal catalyst and the case of a deteriorated catalyst;
FIG. 4 is a flowchart showing a monitoring process in the first embodiment of the invention;
FIG 5 shows a deterioration criterion value calculation map;
FIG 6 is a schematic system diagram of an internal combustion engine in accordance with a second embodiment of the invention;
FIG 7 shows results of a test in which changes in the methane concentration in the case where the air-fuel ratio was changed were investigated;
FIG 8 is a flowchart showing a monitoring process in accordance with a second embodiment of the invention.

### DETAILED DESCRIPTION OF EMBODIMENTS

A first embodiment of the invention will be described below with reference to the accompanying drawings.

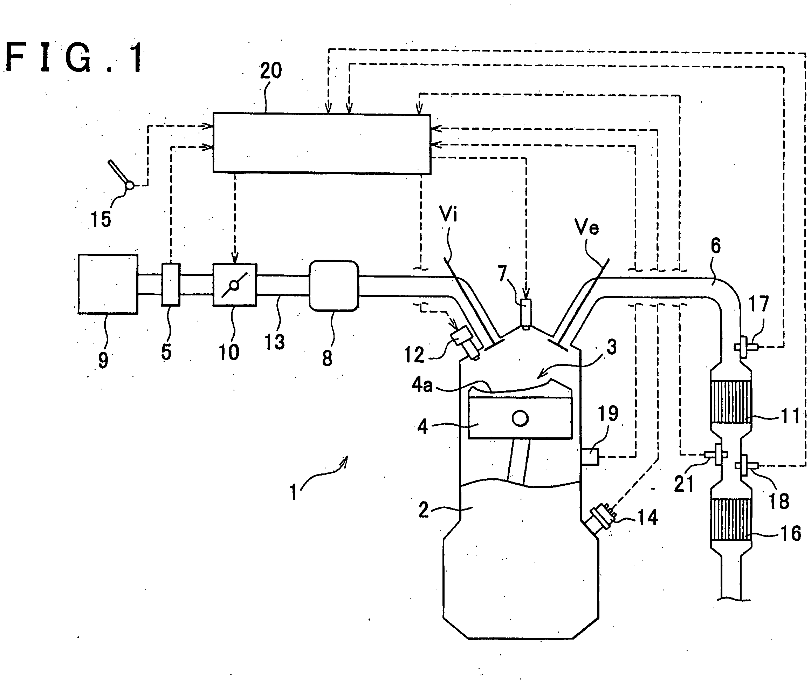

FIG 1 is a schematic system diagram of an internal combustion engine in accordance with the first embodiment of the invention. As shown in FIG 1, an internal combustion engine 1 generates power by burning a mixture gas of fuel and air within combustion chambers 3 formed in a cylinder block 2 and thus reciprocating a piston 4 within each combustion chamber 3. The internal combustion engine 1 is a vehicular multicylinder engine (only one cylinder is shown), and is a spark ignition type internal combustion engine, more concretely, a gasoline engine.

In a cylinder head of the internal combustion engine 1, an intake valve Vi that opens and closes an intake port and an exhaust valve Ve that opens and closes an exhaust port are disposed separately for each cylinder. The intake valves Vi and the exhaust valves Ve are opened and closed by camshafts (not shown). Besides, in a top portion of the cylinder head, ignition plugs 7 are attached separately for the individual cylinders for igniting the mixture gas within the combustion chambers 3. Furthermore, in the cylinder head, injectors (fuel injection valves) 12 are disposed separately for the individual cylinders so as to directly inject fuel into the combustion chambers 3. Each piston 4 is constructed to have a so-called "deep bowl type piston head" and has a recess portion 4a formed in an upper surface thereof. In each combustion chamber 3 of the internal combustion engine 1, fuel is directly injected toward the recess portion 4a of the piston 4 from the injector 12 while air has been sucked into the combustion chamber 3. As a result, in the vicinity of the ignition plug 7, a layer of the mixture gas of fuel and air is formed discontinuously from the surrounding air layer (i.e., is stratified), so that stable stratified combustion is accomplished.

The intake ports of the cylinders are connected to a surge tank 8 that is an intake air collective chamber via branch pipes of the individual cylinders. An intake pipe 13 that forms an intake air collective passageway is connected to an upstream side of the surge tank 8. An upstream-side end of the intake pipe 13 is provided with an air cleaner 9. In the intake pipe 13, an air flow meter 5 for detecting the intake air amount and an electronically controlled throttle valve 10 are incorporated in that order from the upstream side. Incidentally, the intake ports, the surge tank 8 and the intake pipe 13 form an intake passageway.

On the other hand, the exhaust ports of the cylinders are connected to an exhaust pipe 6 that forms an exhaust collective passageway via branch pipes of the individual cylinders. The exhaust ports, the branch pipes and the exhaust pipe 6 form an exhaust passageway. The exhaust pipe 6 is provided with three-way catalysts 11, 16 that have an O₂ storage function as described above and that are capable of simultaneously removing CO, HC and NOx in exhaust gas. As for the three-way catalysts 11, 16, one three-way catalyst may also be termed the upstream catalyst 11, and the other three-way catalyst provided on the downstream side of the upstream catalyst 11 may also be termed the downstream catalyst 16. A pre-catalyst air-fuel ratio sensor 17 that is an air-fuel ratio sensor for detecting the exhaust air-fuel ratio is provided on the upstream side of the upstream catalyst 11. Likewise, a post-catalyst air-fuel ratio sensor 18 that is an air-fuel ratio sensor for detecting the exhaust air-fuel ratio is also provided on the downstream side. The pre-catalyst air-fuel ratio sensor 17 is formed by a so-called "wide-range air-fuel ratio sensor", and is therefore able to continuously detect the air-fuel ratio over a relatively wide range, and output an electric current signal proportional to the detected air-fuel ratio. On the other hand, the post-catalyst air-fuel ratio sensor 18 is formed by a so-called "O₂ sensor", and has a characteristic of the output voltage sharply changing at the stoichiometric air-fuel ratio. The post-catalyst air-fuel ratio sensor 18 is provided between the upstream catalyst 11 and the downstream catalyst 16.

A methane sensor 21 (hereinafter, referred to as "post-catalyst methane sensor 21") that detects the concentration of methane (CH₄), which is a portion of components in the hydrocarbon (HC) in the exhaust gas is provided on the downstream side of the upstream catalyst 11. Incidentally, the post-catalyst methane sensor 21 is also provided between the upstream catalyst 11 and the downstream catalyst 16.

The ignition plugs 7, the throttle valves 10, the injectors 12, etc., that are mentioned above are electrically connected to an electronic control unit (hereinafter, abbreviated as ECU) 20 that is provided as control means. The ECU 20 includes a CPU, a ROM, a RAM, input/output ports, a storage device, etc. (none of which is shown). As shown in FIG 1, various sensors and the like are connected to the ECU 20 via an A/D converter and the like, including the air flow meter 5, the pre-catalyst air-fuel ratio sensor 17, the post-catalyst air-fuel ratio sensor 18 and the post-catalyst methane sensor 21, and also including a crank angle sensor 14 that detects the crank angle of the internal combustion engine 1, an accelerator operation amount sensor 15 that detects the accelerator operation amount, a water temperature sensor 19 that detects the cooling water temperature of the internal combustion engine 1, etc. On the basis of the detected values or the like from the various sensors, the ECU 20 controls the ignition timing, the amount of fuel injection, the fuel injection timing, the degree of throttle opening, etc. by controlling the ignition plugs 7, the throttle valves 10, the injectors 12, etc., in such a manner that desired output is obtained.

The upstream catalyst 11 and the downstream catalyst 16 simultaneously remove NOx, HC and CO when the air-fuel ratio A/F of the exhaust gas flowing into the catalysts is a stoichiometric air-fuel ratio (e.g., A/F=14.6). Correspondingly, the ECU 20 controls the air-fuel ratio so that the air-fuel ratio of the mixture gas and therefore of the exhaust gas becomes equal to the stoichiometric air-fuel ratio (so-called "stoichiometric control"). Concretely, the ECU 20 sets a target air-fuel ratio equal to the stoichiometric air-fuel ratio, and feedback-controls the amount of fuel injected from the injectors 12 so that the air-fuel ratio detected by the pre-catalyst air-fuel ratio sensor 17 becomes equal to the target air-fuel ratio. Therefore, the air-fuel ratio of the exhaust gas supplied to the three-way catalysts 11, 16 is kept in the vicinity of the stoichiometric air-fuel ratio, so that the three-way catalysts 11, 16 deliver maximum removal performance.

The post-catalyst methane sensor 21 used herein may be a methane sensor disposed in, for example, Japanese Patent Application Publication No. 11-118758 (JP-A-11-118758). This sensor outputs an oxygen pump current that corresponds to the concentration of HC components other than methane when a built-in heater is set at a first set temperature (e.g., 500°C). When the heater is set at a second set temperature (e.g., 650°C), the sensor outputs an oxygen pump current that corresponds to the concentration of all the HC components. From a concentration difference therebetween, the ECU 20 computes a methane concentration.

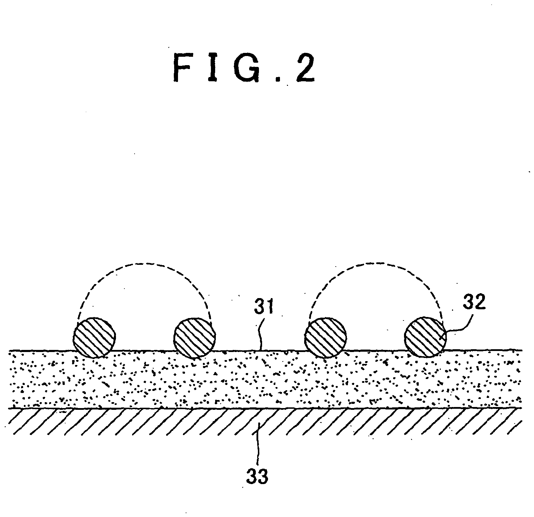

The three-way catalysts that form the upstream catalyst 11 and the downstream catalyst 16 will be described further in detail. As shown in FIG 2, in the catalyst, a surface of a support substrate 33 is coated with a coating material 31, and a catalyst component 32 in a fine powder state is retained in the coating material 31 in an arrangement of many dispersed particles, and is exposed within the catalyst. The catalyst component 32 is mainly made up of a noble metal, such as Pt, Pd, etc., and serves as active sites for reactions of exhaust gas components, such as NOx, HC and CO. On the other hand, the coating material 31 contains an oxygen storage component that plays a role of a promoter that accelerates the reactions on the interface between exhaust gas and the catalyst component 32, and that is capable of absorbing and releasing oxygen according to the air-fuel ratio of the atmosphere gas. The oxygen storage component is made up of, for example, cerium dioxide CeO₂. For example, if the atmosphere gas around the catalyst component 32 and the coating material 31 is richer than the stoichiometric air-fuel ratio, oxygen stored in the oxygen storage component present around the catalyst component 32 is released therefrom. As a result, the released oxygen oxidizes unburnt components, such as HC and CO, thus removing the components. Conversely, if the atmosphere gas around the catalyst component 32 and the coating material 31 is leaner than the stoichiometric air-fuel ratio, the oxygen storage component present around the catalyst component 32 absorbs oxygen from the atmosphere gas, resulting in the reductive removal of NOx.

Due to this oxygen absorption/release action, the three exhaust gas components, that is, NO, HC and CO, are be simultaneously removed although the exhaust air-fuel ratio may fluctuate to some extent with respect to the stoichiometric air-fuel ratio during an ordinary air-fuel ratio control. Therefore, it is also possible to perform exhaust gas purification by intentionally oscillating the exhaust air-fuel ratio to the lean side and the rich side of the stoichiometric air-fuel ratio to a very small extent with reference to the stoichiometric air-fuel ratio.

Incidentally, as the catalyst deteriorates, a portion of the catalyst component 32 disappears, and some of the catalyst component 32 bakes and fixes together due to exhaust heat, and thus becomes sintered (see dashed lines in FIG 2). This causes a decline in the probability of the contact between exhaust gas and the catalyst component 32, which may become a factor that lowers the removal rate. Besides, the amount of the coating material 31 present around the catalyst component 32, that is, the amount of the oxygen storage component, decreases, and the oxygen storage capability itself declines. Thus, there is a correlation between the degree of deterioration of the catalyst and the degree of decline of the oxygen storage capability as described above, and this may sometimes be utilized to perform the monitoring regarding the catalyst. Concretely, there is a method in which the oxygen storage capability of the catalyst, that is, oxygen storage capacity (OSC, whose unit is g) as a maximum amount of oxygen that the catalyst in the present state may store, is measured, and it is determined whether the catalyst is normal or deteriorated depending on whether the measured value of the oxygen storage capacity is larger or smaller than a predetermined deterioration criterion value. This method may be termed the Cmax method or the like, and is known as a common monitoring method for the three-way catalyst. This invention provides a monitoring method that focuses on the HC removal capability of the catalyst, as a method different from the Cmax method.

Next, a catalyst monitoring in accordance with the invention will be described. The object of this monitoring is the upstream catalyst 11, of the upstream catalyst 11 and the downstream catalyst 16.

Generally, in the monitoring in accordance with the invention, the concentration of a portion of components in the hydrocarbon in the exhaust gas flowing into the upstream catalyst 11 (hereinafter, referred to as "the pre-catalyst portion of components") is detected or estimated. Similarly, the concentration of the portion of components in the hydrocarbon in the exhaust gas flowing out of the upstream catalyst 11 (hereinafter, referred to as "the post-catalyst a portion of components") is detected. Then, on the basis of the concentration of the pre-catalyst portion of components and the concentration of the post-catalyst portion of components, it is determined whether or not the upstream catalyst 11 has been deteriorated.

The HCs in exhaust gas include a plurality of diverse components, including representative hydrocarbons such as methane (CH₄), ethane (C₂H₆), propane (C₃H₈), butane (C₄H₁₀), benzene (C₆H₆), toluene (C₇H₈), xylene (C₈H₁₀), ethylene (C₂H₄), and also including components with greater carbon numbers or various intermediates, etc. According to the technology described in Japanese Patent No. 2705039 described above, the total concentration of all the HC components is detected by the HC sensors. Therefore, this technology needs to employ sensors that have a wide measurement range of, for example, 1000 ppm or higher, and at the same time, needs to discriminate the magnitude (high or low) of the HC concentration at the downstream side of the catalyst which is at a low level of several ten ppm. Therefore, this technology may sometimes fail to provide high detection accuracy and therefore high monitoring accuracy.

However, according to the monitoring in accordance with the invention, the object component is limited to a portion of components of HCs beforehand. Hence, the pre-catalyst concentration of the component may be decreased, and the required measurement range may also be decreased, so that different post-catalyst concentrations that are at a low level may be discriminated with high accuracy. As a result, it becomes possible to secure high monitoring accuracy.

It is conceivable to make such an arrangement that the a portion of components is at least one of methane, ethane and propane. The constituent components of the HCs are more unstable the greater their carbon numbers. As for the HC components that flow into the catalyst, it is considered that those with greater carbon numbers more quickly decompose to undergo oxidation, via the reaction with the catalyst, and thus be removed (disappear). Conversely, it is considered that the HC components with smaller carbon numbers are more stable, and are less easily removed during the passage through the catalyst. In other words, as for the HC components with small carbon numbers, their removal rate is likely to be dependent on the degree of deterioration of the catalyst, and more strongly tends to exhibit a clear difference between the fresh state and the deteriorated state of the catalyst. Therefore, by selecting, as the portion of components in the hydrocarbon components, a portion whose carbon number is small, such as at least one of methane, ethane and propane, it becomes possible to suitably appreciate the degree of deterioration of the catalyst. Incidentally, the concentration of the portion of components, in the case where one of methane, ethane and propane is selected, refers to the concentration of only the selected component. In the case where two or three of methane, ethane and propane are selected, the concentration of the portion of components refers to the total concentration of the selected components. Naturally, the pre-catalyst portion of components and the post-catalyst portion of components need to be the same.

Incidentally, if the portion of components is methane, the removal rate thereof is considered to reflect the degree of deterioration of the catalyst most significantly since methane has the least carbon number and is the most stable.

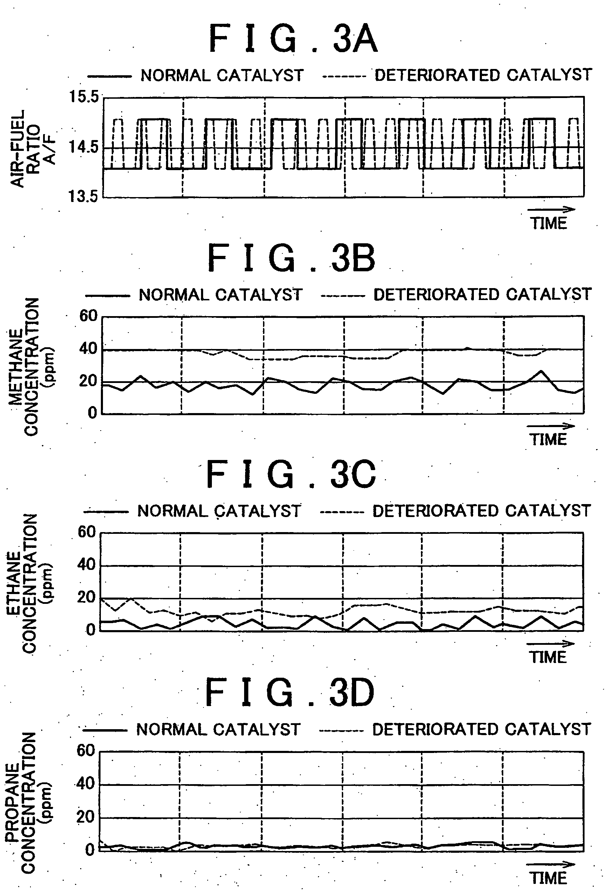

Now, with reference to FIGS. 3A to 3D, results of a test in which the concentrations of HC components in exhaust gas are compared between the case of a normal catalyst and the case of a deteriorated catalyst will be described. In this test, an active air-fuel ratio control of forcing the air-fuel ratio of exhaust gas flowing into the catalyst to switch to the lean or rich side of the stoichiometric air-fuel ratio (A/F=14.6) was performed, and the concentration of each of methane, ethane and propane in the exhaust gas downstream of the catalyst was investigated in the case of the normal catalyst and in the case of the deteriorated catalyst. The concentration of each of methane, ethane and propane was measured by a gas analyzer (FTIR). In FIGS. 3A to 3D, solid lines correspond to the case of the normal catalyst, and dashed lines correspond to the case of the deteriorated catalyst.

As shown in FIG 3A, the air-fuel ratio of the exhaust gas flowing into the catalyst was forced to switch alternately to the lean side and the rich side with the stoichiometric air-fuel ratio (A/F=14.6) being the center therebetween. The amplitude to the lean side and that to the rich side were equal to 0.5; that is, the lean-side air-fuel ratio was 15.1 and the rich side air-fuel ratio was 14.1. The switching intervals (inversion periods) were shorter in the case of the deteriorated catalyst than in the case of the normal catalyst. This is because the air-fuel ratio was switched every time the storage of oxygen into the catalyst during the lean condition or the release of oxygen from the catalyst during the rich condition proceeded up to the full exploitation of the oxygen storage capacity of the catalyst. Since the oxygen storage capacity is smaller in the deteriorated catalyst than in the normal catalyst, the inversion period was shorter with the deteriorated catalyst than with the normal catalyst in the test. The active air-fuel ratio control as described above is conducted usually by the Cmax method.

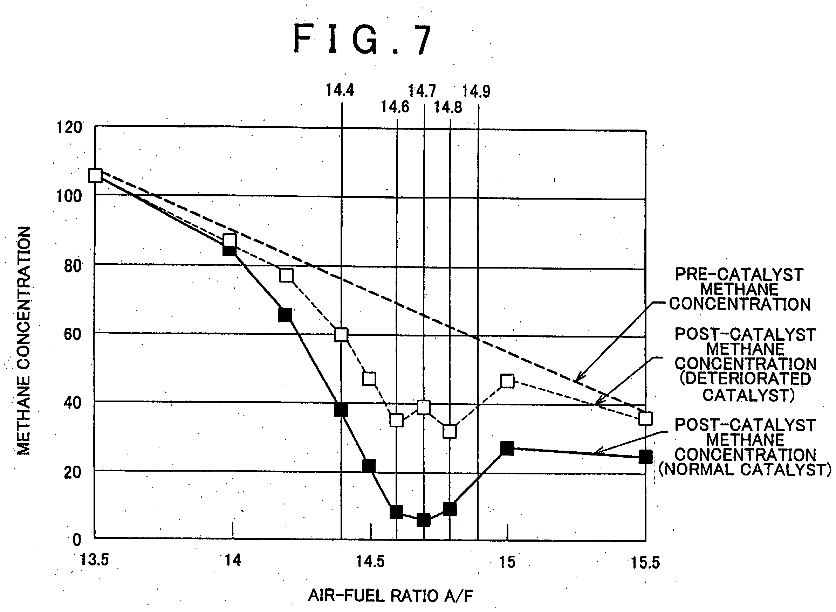

As shown in FIG. 3B, the methane concentration in the exhaust gas flowing out of the catalyst was about 20 ppm in the case of the normal catalyst, and about 40 ppm in the case of the deteriorated catalyst, which had a difference of about 20 ppm. As shown in FIG 3C, the ethane in the exhaust gas flowing out of the catalyst was less than or equal to 10 ppm in both the case of the normal catalyst and the case of the deteriorated catalyst, which had a difference less than the 10 ppm. On the other hand, as shown in FIG. 3D, the propane concentration in the exhaust gas flowing out of the catalyst was about 0 ppm in the case of the normal catalyst and the case of the deteriorated catalyst, and thus no difference was seen therebetween. The methane concentration in the exhaust gas flowing into the catalyst, as shown in FIG 7, changes according to the air-fuel ratio of the exhaust gas, but is in the order of about 100 ppm or less.

From these results, it may be understood that the less the carbon number of an HC component, the greater the difference in the post-catalyst concentration (as a concentration of a portion of components in the hydrocarbon in the exhaust gas flowing out of the catalyst) between the case of the normal catalyst and the case of the deteriorated catalyst, that is, the greater the change in the removal rate. In particular, if the object HC component is limited to methane, the pre-catalyst methane concentration (as a concentration of a portion of components in the hydrocarbon in the exhaust gas flowing out of the catalyst) is in the order of about 100 ppm or less, and a difference of about 20 ppm from the pre-catalyst concentration is obtained. This means that a difference of about 20% in terms of the removal rate may be obtained. As for ethane, effects and the like similar to, although not as good as, those of methane may be said to be obtained. As for propane, the results of the test did not show a difference between the case of the normal catalyst and the case of the deteriorated catalyst. However, these are test results obtained by carrying out the active air-fuel ratio control, and a change in the test condition (exhaust gas conditions) may provide different results. Hence, as for propane, too, effects and the like similar to those of methane and ethane may be said to be obtained.

Taking the test results into consideration, the object HC component in the first embodiment of the invention is limited to methane, which exhibits the greatest concentration difference between the normal state and the deteriorated state of the catalyst. However, it is also permissible to adopt ethane or propane instead of the methane, or a combination of two or more of these three substances. The combinations of two or more of the three substances include four combinations, that is, a combination of methane and ethane, a combination of methane and propane, a combination of propane and ethane, and a combination of methane, ethane and propane. Among these combination examples, the combination of methane and ethane has the least carbon number, and is therefore suitable.

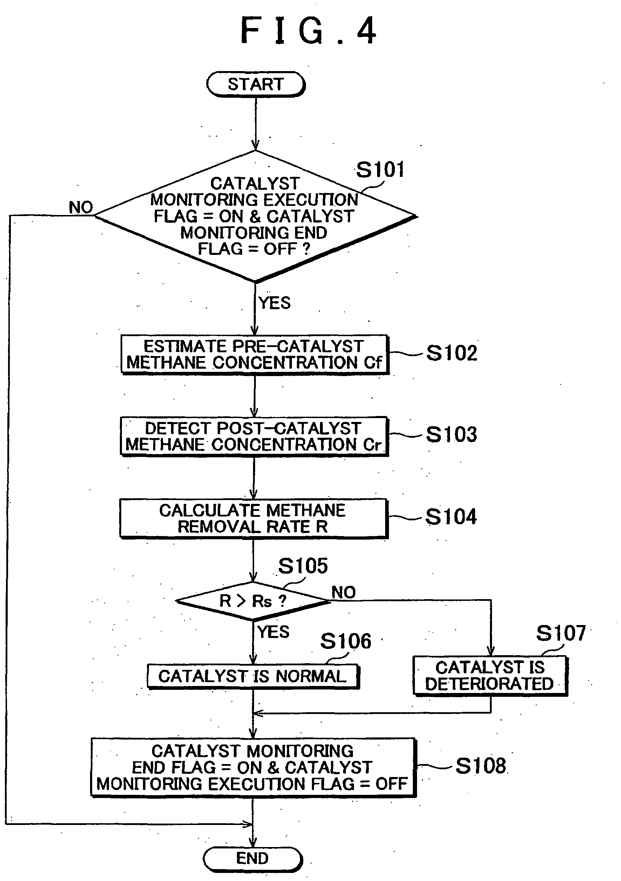

Next, a process for executing the above-described monitoring will be described with reference to FIG. 4. The process shown in FIG 4 is repeatedly executed by the ECU 20 at every predetermined computation cycle.

Firstly, in step S101, it is determined whether or not a catalyst monitoring execution flag is on and a catalyst monitoring end flag is off. The catalyst monitoring execution flag is turned on when a predetermined condition suitable for the catalyst monitoring is satisfied. The satisfaction of the condition is obtained, for example, when the following conditions are all satisfied, that is, a condition that a cooling water temperature Tw detected by the water temperature sensor 19 be higher than or equal to a predetermined value (i.e., a condition that the warmup have ended), a condition that the engine operation state be a steady state, and a condition that the upstream catalyst 11 be in a predetermined active temperature range. The condition that the engine operation state be a steady state is satisfied, for example, when the value of intake air amount Ga detected by the air flow meter 5 is within a predetermined fluctuation width. In first embodiment, catalyst temperature detection means for detecting or estimating the temperature Tc of the upstream catalyst 11 is provided; concretely, the temperature Tc of the upstream catalyst 11 is estimated according to a predetermined map or function on the basis of the engine operation state (e.g., the rotation speed Ne and the intake air amount Ga). When this estimated temperature is in a predetermined active temperature range, the condition that the upstream catalyst 11 be in a predetermined active temperature range is satisfied. Incidentally, the temperature Tc of the upstream catalyst 11 may also be directly detected by a temperature sensor that is provided at a location of the upstream catalyst 11, or the temperature Tc of the upstream catalyst 11 may also be estimated from an exhaust gas temperature that is detected by a temperature sensor that is provided upstream side of the upstream catalyst 11.

If the answer to the determination in step S101 is "NO", this process ends. If the answer to the determination in step S101 is "YES", the process proceeds to step S102.

In step S102, the methane concentration (hereinafter, referred to as "pre-catalyst methane concentration") Cf in the exhaust gas discharged from the internal combustion engine 1 and flowing into the upstream catalyst 11 is estimated. This estimation is performed by the ECU 20 according to a map or a function created beforehand through experiments or the like, on the basis of the engine operation state (e.g., the rotation speed Ne, the intake air amount Ga and the cooling water temperature Tw). Thus, in the first embodiment, the pre-catalyst methane concentration Cf is estimated. Alternatively, a methane sensor may be separately provided on the upstream side of the upstream catalyst 11, and the pre-catalyst methane concentration Cf may be directly detected by the methane sensor. In the case where the methane concentration is estimated as in the first embodiment, the pre-catalyst methane sensor is not needed, and therefore this construction is advantageous in terms of cost. In the case where the methane sensor is separately provided, while there is a disadvantage in cost, there is an advantage of reducing the cost increase since the pre-catalyst methane concentration Cf is about 100 ppm at the maximum, and therefore allows the use of a methane sensor identical to the post-catalyst methane sensor 18. Furthermore, if the pre-and-post-catalyst methane sensors are identical, it is also possible to detect with high accuracy not only the pre-catalyst methane concentration Cf but also the post-catalyst methane concentration Cr that will be described further in detail.

Next in step S103, the methane concentration (hereinafter, referred to as "post-catalyst methane concentration") Cr in the exhaust gas flowing out of the upstream catalyst 11 is detected by the methane sensor 18. The post-catalyst methane concentration Cr, as described above, is in the order of several ten ppm, and it suffices to detect the post-catalyst methane concentration Cr by the methane sensor 18, which has a measurement range of about 100 ppm. Therefore, a difference in the methane concentration between the normal state and the deteriorated state of the catalyst may be detected with good accuracy, and therefore the monitoring accuracy may be heightened. Thus, false monitoring may be prevented.

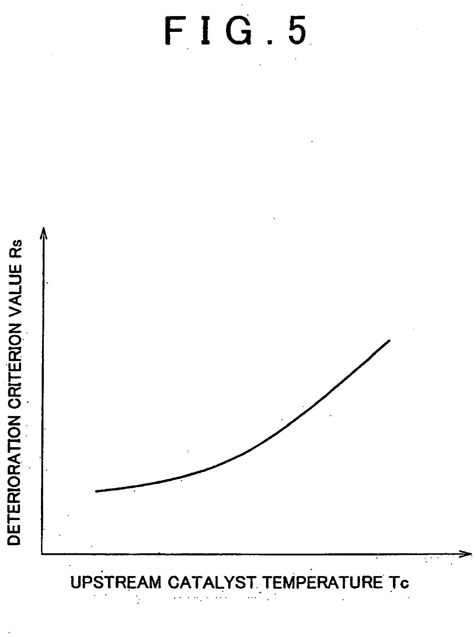

Subsequently in step S104, a methane removal rate R of the upstream catalyst 11 is calculated on the basis of the pre-catalyst methane concentration Cf and the post-catalyst methane concentration Cr. This methane removal rate R is calculated using the following equation: R=(1-Cr/Ct)×100 (%). Next, the obtained methane removal rate R is compared with a predetermined deterioration criterion value Rs in step S105. The deterioration criterion value Rs is a function with the temperature Tc (hereinafter, referred to as "the upstream catalyst temperature Tc") of the upstream catalyst 11, and FIG 5 is calculated from a predetermined map as shown in FIG. 5 on the basis of the upstream catalyst temperature Tc. The higher the upstream catalyst temperature Tc, the larger the deterioration criterion value Rs becomes. This corresponds to that the higher the upstream catalyst temperature Tc, the higher the methane removal rate R becomes.

In the case where the methane removal rate R is greater than the deterioration criterion value Rs, it is determined in step S106 that the upstream catalyst 11 is normal. On the other hand, in the case where the methane removal rate R is less than or equal to the deterioration criterion value Rs, it is determined in step S107 that the upstream catalyst 11 has been deteriorated.

Finally, in step S108, the catalyst monitoring end flag is turned on and the catalyst monitoring execution flag is turned off. Then, this process ends.

Next, a second embodiment of the invention will be described. The second embodiment is substantially the same as the first embodiment, and the following description will be made mainly about the differences from the first embodiment. The second embodiment has features mainly in that at the time of estimating or detecting the pre-catalyst methane concentration Cf and the post-catalyst methane concentration Cr, an air-fuel ratio control of controlling the air-fuel ratio of the exhaust gas flowing into the upstream catalyst 11 to a predetermined air-fuel ratio is executed.

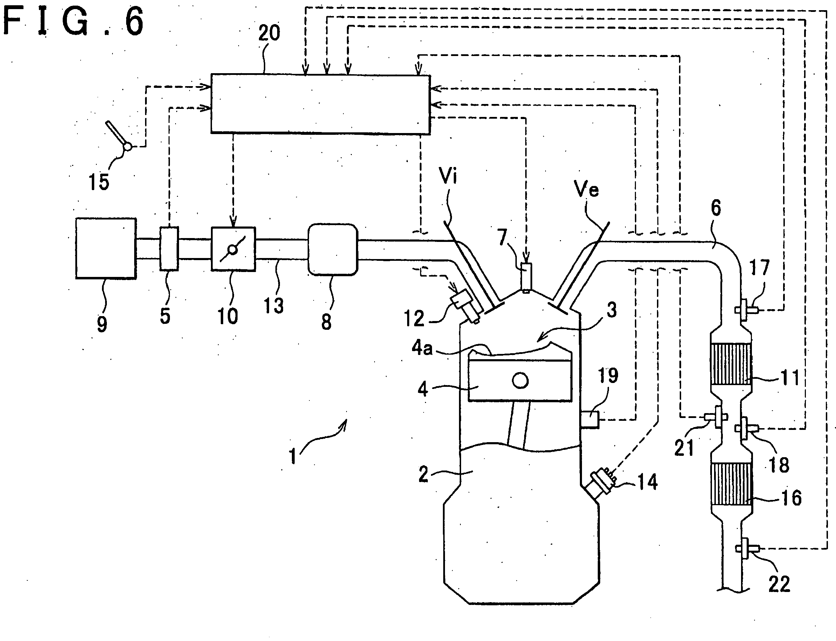

Firstly, as a difference in construction, an air-fuel ratio sensor 22 is additionally provided on the downstream side of the downstream catalyst 16 as shown in FIG. 6. Hereinafter, this air-fuel ratio sensor 22 will be referred to as "downstream-post-catalyst air-fuel ratio sensor". The downstream-post-catalyst air-fuel ratio sensor 22 may be a wide-range air-fuel ratio sensor similar to the pre-catalyst air-fuel ratio sensor 17, or an O₂ sensor similar to the post-catalyst air-fuel ratio sensor 18. In the second embodiment, the downstream-post-catalyst air-fuel ratio sensor 22 is an O₂ sensor.

FIG 7 shows results of a test in which changes in the methane concentration in the case where the air-fuel ratio A/F of the exhaust gas flowing into the three-way catalyst was changed were investigated. A thick dashed line shows the pre-catalyst methane concentration, solid squares show the post-catalyst methane concentration in the case of a normal catalyst, and hollow squares show the post-catalyst methane concentration in the case of a deteriorated catalyst.

As shown in FIG. 7, as the air-fuel ratio A/F becomes larger (becomes leaner), the amount of HCs lessens, and therefore the pre-catalyst methane concentration and the post-catalyst methane concentration both tend to decrease. The post-catalyst methane concentration extremely decreases (i.e., the methane removal rate becomes large) in the vicinity of the stoichiometric air-fuel ratio (A/F=14.6) which is a purification window of the three-way catalyst. Incidentally, the air-fuel ratio at which the post-catalyst methane concentration becomes minimum, and the air-fuel ratio at which the difference in the post-catalyst methane concentration between the case of the normal catalyst and the case of the deteriorated catalyst becomes maximum are not the stoichiometric air-fuel ratio, but a value that is slightly to the lean side of the stoichiometric air-fuel ratio. According to the test results, the value is 14.7. The reason for this is that the removal (oxidation) of methane needs oxygen, and surplus oxygen exists in the vicinity of the catalyst when the air-fuel ratio is lean of the stoichiometric air-fuel ratio. Besides, since the three-way catalyst achieves a maximum removal rate when the air-fuel ratio is equal to the stoichiometric air-fuel ratio, an excessive shift to the lean side results in a decline in the removal rate. It is considered that due to the balance between the surplus oxygen amount and the catalyst's exhaust gas purification efficiency, the value of 14.7, slightly shifted to the lean side of the stoichiometric air-fuel ratio, provides for a maximum methane removal rate, that is, provides for a maximum difference in the post-catalyst methane concentration between the normal catalyst and the deteriorated catalyst.

In view of the test results, it is preferable that at the time of estimation and detection of the pre-catalyst methane concentration Cf and the post-catalyst methane concentration Cr, the air-fuel ratio of the exhaust gas flowing into the upstream catalyst 11 be controlled to such a predetermined air-fuel ratio A/Fm as to produce a large difference in the post-catalyst methane concentration Cr between the case of the normal catalyst and the case of the deteriorated catalyst. It is preferable that the predetermined air-fuel ratio A/Fm be a value selected from a predetermined range that has a width to the rich side and to the lean side from a reference value that is a predetermined value on the lean side of the stoichiometric air-fuel ratio (A/F=14.6). In view of the foregoing test results, it is preferable that the predetermined air-fuel ratio A/Fm be selected from a predetermined value that has a width to the rich side and to the lean side from the reference value that is A/F=14.7, that is, 14.4≤A/F≤14.9. It is more preferable that the predetermined air-fuel ratio A/Fm be a value on the lean side of the stoichiometric air-fuel ratio (14.6<A/Fm), and be selected from the range of 14.6<A/F≤14.8. More preferably, a value of the predetermined air-fuel ratio A/Fm is a value of 14.7. In this embodiment, the predetermined air-fuel ratio A/Fm is set at 14.7.

By executing the foregoing air-fuel ratio control as well, it becomes possible to obtain a large difference in the post-catalyst methane concentration between the case of the normal catalyst and the case of the deteriorated catalyst and improve the monitoring accuracy.

Incidentally, since the removal efficiency of the catalyst is dependent on the catalyst temperature, a decrease in the catalyst temperature raises the post-catalyst methane concentration so that the graphs of the post-catalyst methane concentration in FIG. 7 approach the graph of the pre-catalyst methane concentration. In association with this, the post-catalyst methane concentration difference between the normal and deteriorated catalysts lessens.

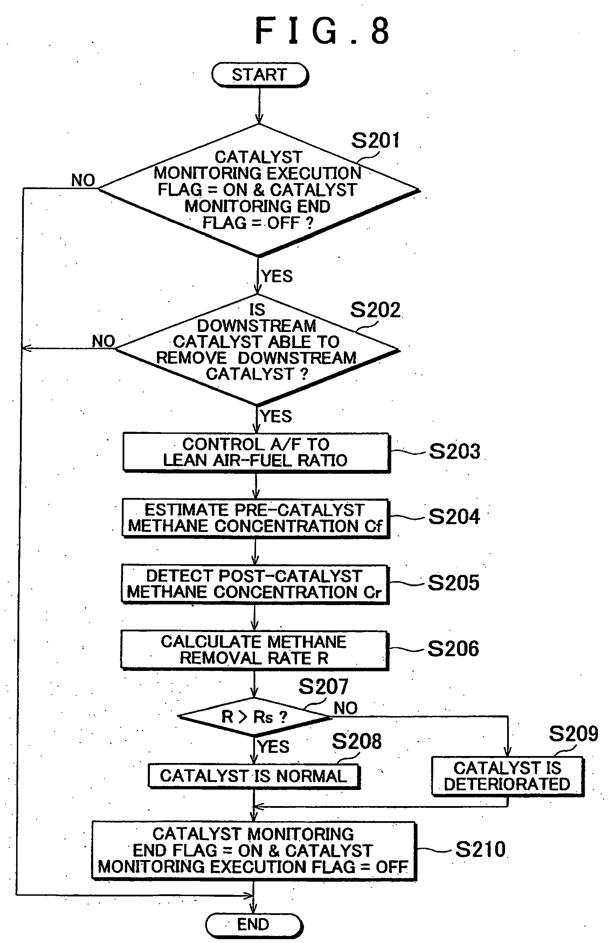

A monitoring process in accordance with the second embodiment will be described with reference to FIG. 8. The process shown in FIG 8 is repeatedly executed by the ECU 20 at every computation cycle.

Firstly, in step S201, similar to step S101, it is determined whether or not the catalyst monitoring execution flag is on and the catalyst monitoring end flag is off. If the answer to the determination is "NO", the process ends. If the answer to the determination is "YES", the process proceeds to step S202.

In step S202, it is determined whether or not the downstream catalyst 16 is in a state of being able to remove NOx. This step is provided as a preparation for step S203. In step S203, the exhaust air-fuel ratio is controlled to a predetermined air-fuel ratio A/Fm that is lean of the stoichiometric air-fuel ratio, which makes it likely that NOx will flow out from the upstream catalyst 11. Therefore, if the control of the exhaust air-fuel ratio to the predetermined air-fuel ratio A/Fm is performed on condition that the downstream catalyst 16 be in the state of being able to remove NOx, the NOx that flows out from the upstream catalyst 11 may be removed by the downstream catalyst 16, and therefore the emission of NOx into the atmosphere may be prevented.

Concretely, in step S202, it is determined whether or not the downstream-post-catalyst air-fuel ratio sensor 22 is outputting a value that corresponds to an air-fuel ratio that is lean of the stoichiometric air-fuel ratio. If the downstream-post-catalyst air-fuel ratio sensor 22 is not outputting a value that corresponds to a lean air-fuel ratio, it is considered that a lean gas is not flowing out from the downstream catalyst 16 and therefore the downstream catalyst 16 is in a state of being able to store oxygen. Hence, if NOx is caused to flow into the downstream catalyst 16 in this state, the NOx may be removed by reduction. Incidentally, the condition that the downstream-post-catalyst air-fuel ratio sensor 22 be not outputting a value that corresponds to a lean air-fuel ratio may also be replaced with a condition that an estimated amount of oxygen stored in the downstream catalyst 16 be less than a predetermined value (e.g., a predetermined value less than or equal to a value that corresponds to the full capacity.

If, in step S202, it is determined that the downstream catalyst 16 is not in the state of being able to remove NOx, the process ends. If it is determined that the downstream catalyst 16 is in the state of being able to remove NOx, the process proceeds to step S203. In step S203, as described above, the air-fuel ratio of the exhaust gas discharged from the internal combustion engine 1 and flowing into the upstream catalyst 11 is controlled to a predetermined air-fuel ratio A/Fm that is lean of the stoichiometric air-fuel ratio.

Next, a process similar to the process of step S102 to S108 in the first embodiment is performed. Concretely, in step S204, the pre-catalyst methane concentration Cf is estimated. In step S205, the post-catalyst methane concentration Cr is detected. In step S206, the methane removal rate R is calculated. Then in step S207, the methane removal rate R is compared with a predetermined deterioration criterion value Rs. If the methane removal rate R is greater than the deterioration criterion value Rs, it is determined in step S208 that the upstream catalyst 11 is normal. If the methane removal rate R is less than or equal to the deterioration criterion value Rs, it is determined in step S209 that the upstream catalyst 11 has been deteriorated. Finally, in step S210, the catalyst monitoring end flag is turned on, and the catalyst monitoring execution flag is turned off, and the air-fuel ratio control of making the air-fuel ratio equal to the predetermined air-fuel ratio A/Fm is ended. Thus, this process is ended.

According to the monitoring technique in accordance with the invention, the following advantages over the common Cmax method are achieved. In recent years, there is a tendency toward decrease of the amount of noble metals used in catalysts. If the amount of a noble metal in a catalyst decreases, the reaction rate of the catalyst declines so that even if a lean or rich gas is supplied to the catalyst to cause the absorption or release of oxygen, the catalyst may not be able to perfectly absorb or release oxygen. In such a case, the oxygen storage capacity OSC of the catalyst may be measured as a value that is smaller than the true value thereof. However, in the monitoring technique in accordance with the invention, the catalyst is not caused to absorb or release oxygen. Therefore, even if the amount of a noble metal used in the catalyst is reduced, there is merely involved a reduction of the difference between the pre-catalyst concentration and the post-catalyst concentration (a decline in the removal rate), and false measurement and false detection as mentioned above may be prevented. Hence, the monitoring technique in accordance with the invention may be able to provide highly accurate monitoring without depending on the amount of a noble metal in the catalyst, and therefore is advantageous over the Cmax method in that the technique according to the invention may sufficiently adapt to the recent-year tendency toward decreased amount of a catalyst noble metal.

While the embodiments of the invention have been described, the invention may also adopt other embodiments. For example, although in the foregoing embodiments, the three-way catalyst is used as an object catalyst of the monitoring, the invention is applicable to all the catalysts that are capable of removing at least HCs in exhaust gas. For example, the invention is also applicable to an oxidation catalyst capable of removing HCs and CO, which are unburnt components of exhaust gas. Although in the embodiments, a purification (removal) rate is calculated as an index value that represents the degree of deterioration of the catalyst, and the purification (removal) rate is compared with a predetermined deterioration criterion value for the deterioration determination, this is not restrictive. For example, the concentration difference or the concentration ratio between the upstream and downstream sides of the catalyst is compared with a deterioration criterion value for the deterioration determination. Although in the foregoing embodiments, the downstream catalyst is a three-way catalyst, the downstream side catalyst may be any catalyst as long as the catalyst is able to remove at least NOx in the exhaust gas. For example, NOx catalysts of a storage reduction type, a selective reduction type, etc. may be employed.

The embodiments of the invention are not limited to the foregoing embodiments. On the contrary, the invention includes all the modifications, applications, equivalents, etc. that are encompassed in the idea of the invention defined by the appended claims. Therefore, the invention should not be limitatively interpreted, but is applicable to any technology that belongs to the scope of the idea of the invention.

While the invention has been described with reference to example embodiments thereof, it should be understood that the invention is not limited to the example embodiments or constructions. To the contrary, the invention is intended to cover various modifications and equivalent arrangements within the scope defined by the appended claims.

## Claims

1. A catalyst monitoring system comprising:
a catalyst (11) provided in an exhaust passageway of an internal combustion engine (1) and being capable of removing at least hydrocarbon in an exhaust gas flowing into the catalyst (11);
first concentration detection means for detecting or estimating a concentration of a portion of components in the hydrocarbon in the exhaust gas flowing into the catalyst (11);
second concentration detection means (21) for detecting a concentration of the portion of components in the hydrocarbon in the exhaust gas flowing out of the catalyst (11); **characterized in that**
deterioration determination means for determining whether the catalyst (11) has been deteriorated based on the concentration of the portion of components in the hydrocarbon flowing into the catalyst (11) and the concentration of the portion of components in the hydrocarbon flowing out of the catalyst (11), wherein
the portion of components in the hydrocarbon in the exhaust gas includes at least one of methane, ethane and propane.

2. The catalyst monitoring system according to claim 1, wherein the portion of components in the hydrocarbon in the exhaust gas is methane.

3. The catalyst monitoring system according to claim 2, wherein:
(A) the first concentration detection means includes methane concentration estimation means for estimating a methane concentration in the exhaust gas flowing into the catalyst (11) based on an operation state of the internal combustion engine (1), and
the second concentration detection means (21) includes a methane sensor (21),
wherein the operation state of the internal combustion engine (1) may be at least one of rotation speed, intake air amount, and cooling water temperature; or
(B) the first concentration detection means and the second concentration detection means (21) include a methane sensor (21).

4. The catalyst monitoring system according to any of claims 1 to 3, wherein the deterioration determination means calculates a removal rate of the portion of components in the hydrocarbon in the exhaust gas flowing into the catalyst (11) based on the concentration of the portion of components in the hydrocarbon in the exhaust gas flowing into the catalyst (11) and the concentration of the portion of components in the hydrocarbon in the exhaust gas flowing out of the catalyst (11), and determines whether the catalyst (11) has been deteriorated based on the removal rate;
and preferably the deterioration determination means compares the removal rate with a deterioration criterion value that is obtained from a function with temperature of the catalyst (11), and determines that the catalyst (11) has been deteriorated if the removal rate is less than or equal to the deterioration criterion value.

5. The catalyst monitoring system according to any of claims 1 to 4, further comprising air-fuel ratio control means for controlling air-fuel ratio of the exhaust gas flowing into the catalyst (11) to a predetermined air-fuel ratio when the concentration of the portion of components in the hydrocarbon is detected or estimated by the first concentration detection means and when the concentration of the portion of components in the hydrocarbon is detected by the second concentration detection means (21).

6. The catalyst monitoring system according to claim 5, wherein
(A) a value of the predetermined air-fuel ratio is selected from a predetermined width range within a lean side and a rich side with respect to a reference value that is deviated from a stoichiometric air-fuel ratio to the lean side, wherein the reference value is preferably 14.7; and/or
(B) a value of the predetermined air-fuel ratio is selected from a range that is above 14.6 and up to 14.8; or
(C) the predetermined air-fuel ratio has a value that is deviated from a stoichiometric air-fuel ratio to the lean side.

7. The catalyst monitoring system according to claim 5 or 6, further comprising a downstream catalyst (16) provided on a downstream side of the catalyst (11) and being capable of removing at least NOx in the exhaust gas flowing into the downstream catalyst (16),
wherein the air-fuel ratio control means executes the air-fuel ratio control on condition that the downstream catalyst (16) be in a state of being able to remove NOx.

8. The catalyst monitoring system according to any one of claims 1 to 7, wherein the catalyst (11) is a three-way catalyst.

9. A catalyst monitoring method of determining whether a catalyst (11) provided in an exhaust passageway of an internal combustion engine (1) and being capable of removing at least hydrocarbon in an exhaust gas flowing into the catalyst (11) has been deteriorated, comprising:
detecting or estimating a concentration of a portion of components in the hydrocarbon in the exhaust gas flowing into the catalyst (11);
detecting a concentration of the portion of components in the hydrocarbon in the exhaust gas flowing out of the catalyst (11); **characterized by**
determining whether the catalyst (11) has been deteriorated based on the concentration of the portion of components in the hydrocarbon flowing into the catalyst (11) and the concentration of the portion of components in the hydrocarbon flowing out of the catalyst (11), wherein the portion of components in the hydrocarbon in the exhaust gas includes at least one of methane, ethane and propane.

10. The catalyst monitoring method according to claim 9, wherein the portion of components in the hydrocarbon in the exhaust gas is methane, and wherein preferably
(A) a methane concentration in the exhaust gas flowing into the catalyst (11) is estimated based on an operation state of the internal combustion engine (1); and
a methane concentration in the exhaust gas flowing out of the catalyst (11) is detected by a methane sensor (21); or
(B) a methane concentration in the exhaust gas flowing into the catalyst (11) is detected by a methane sensor (21), and
a methane concentration in the exhaust gas flowing out of the catalyst (11) is detected by a methane sensor (21).

11. The catalyst monitoring method according to claim 9 or 10, wherein:
a removal rate of the portion of components in the hydrocarbon flowing into the catalyst (11) is calculated based on the concentration of the portion of components in the hydrocarbon flowing into the catalyst (11) and the concentration of the portion of components in the hydrocarbon flowing out of the catalyst (11), and
it is determined whether the catalyst (11) has been deteriorated based on the removal rate.

12. The catalyst monitoring method according to any of claims 9 to 11, further comprising controlling air-fuel ratio of the exhaust gas flowing into the catalyst (11) to a predetermined air-fuel ratio when the concentration of the portion of components in the hydrocarbon flowing into the catalyst (11) is to be detected or estimated and when the concentration of the portion of components in the hydrocarbon flowing out the catalyst (11) is to be detected; wherein
(A) a value of the predetermined air-fuel ratio may be selected from a predetermined width range within a lean side and a rich side with respect to a reference value that is deviated from a stoichiometric air-fuel ratio to the lean side; or
(B) the predetermined air-fuel ratio may have a value that is deviated from a stoichiometric air-fuel ratio to the lean side; and/or
(C) the catalyst monitoring method further comprises providing a downstream catalyst (16) that is disposed on a downstream side of the catalyst (11) and is capable of removing at least NOx in the exhaust gas flowing into the downstream catalyst (16),
wherein the control of the air-fuel ratio is executed on condition that the downstream catalyst (16) be in a state of being able to remove NOx.

13. The catalyst monitoring method according to any of claims 9 to 12, wherein the catalyst (11) is a three-way catalyst.

## Patentansprüche

1. Katalysatorüberwachungssystem, das umfasst:
einen Katalysator (11), der in einem Abgasdurchgangsweg eines Verbrennungsmotors (1) vorgesehen ist und in der Lage ist, zumindest Kohlenwasserstoff in einem in den Katalysator (11) strömenden Abgas zu entfernen;
eine erste Konzentrationsdetektierungseinrichtung zum Detektieren oder Schätzen einer Konzentration eines Anteils von Bestandteilen in den Kohlenwasserstoff in dem in den Katalysator (11) strömenden Abgas;
eine zweite Konzentrationsdetektierungseinrichtung (21) zum Detektieren einer Konzentration des Anteils von Bestandteilen in dem Kohlenwasserstoff in dem aus dem Katalysator (11) strömenden Abgas; **dadurch gekennzeichnet, dass**
eine Verschlechterungsbestimmungseinrichtung zum Bestimmen, ob der Katalysator (11) sich verschlechtert hat, basierend auf der Konzentration des Anteils von Bestandteilen in dem in den Katalysator (11) strömenden Kohlenwasserstoff und der Konzentration des Anteils von Bestandteilen in dem aus dem Katalysator (11) strömenden Kohlenwasserstoff, wobei
der Anteil von Bestandteilen in dem Kohlenwasserstoff in dem Abgas zumindest eines aus Methan, Ethan und Propan beinhaltet.

2. Katalysatorüberwachungssystem nach Anspruch 1, wobei der Anteil von Bestandteilen in dem Kohlenwasserstoff in dem Abgas Methan ist.

3. Katalysatorüberwachungssystem nach Anspruch 2, wobei:
(A) die erste Konzentrationsdetektierungseinrichtung eine Methankonzentrationsabschätzeinrichtung zum Abschätzen einer Methankonzentration in dem in den Katalysator (11) strömenden Abgas basierend auf einem Betriebszustand des Verbrennungsmotors (1) beinhaltet, und
die zweite Konzentrationsdetektierungseinrichtung (21) einen Methansensor (21) beinhaltet,
wobei der Betriebszustand des Verbrennungsmotors (1) zumindest eines aus Rotationsgeschwindigkeit, Luftaufnahmemenge und Kühlwassertemperatur sein kann; oder
(B) die erste Konzentrationsdetektierungseinrichtung und die zweite Konzentrationsdetektierungseinrichtung (21) einen Methansensor (21) beinhalten.

4. Katalysatorüberwachungssystem nach einem der Ansprüche 1 bis 3, wobei die Verschlechterungsbestimmungseinrichtung die Entfernungsrate des Anteils von Bestandteilen in dem Kohlenwasserstoff in dem in den Katalysator (11) strömenden Abgas basierend auf der Konzentration des Anteils von Bestandteilen in dem Kohlenwasserstoff in dem in den Katalysator (11) strömenden Abgas und der Konzentration des Anteils von Bestandteilen in dem Kohlenwasserstoff in dem aus dem Katalysator (11) strömenden Abgas berechnet, und basierend auf der Entfernungsrate bestimmt, ob der Katalysator (11) sich verschlechtert hat;
und vorzugsweise die Verschlechterungsbestimmungseinrichtung die Entfernungsrate mit einem Verschlechterungskriteriumswert vergleicht, der von einer Funktion mit Temperatur des Katalysators (11) erhalten ist, und bestimmt, dass der Katalysator (11) sich verschlechtert hat, wenn die Entfernungsrate geringer als der oder gleich dem Verschlechterungskriteriumswert ist.

5. Katalysatorüberwachungssystem nach einem der Ansprüche 1 bis 4, das ferner eine Luft-Treibstoff-Verhältnissteuerungseinrichtung zum Steuern eines Luft-Treibstoff-Verhältnisses des in den Katalysator (11) strömenden Abgases auf ein vorbestimmtes Luft-Treibstoff-Verhältnis umfasst, wenn die Konzentration des Anteils von Bestandteilen in dem Kohlenwasserstoff durch die erste Konzentrationsdetektierungseinrichtung detektiert oder geschätzt wird und wenn die Konzentration des Anteils von Bestandteilen in dem Kohlenwasserstoff durch die zweite Konzentrationsdetektierungseinrichtung (21) detektiert wird.

6. Katalysatorüberwachungssystem nach Anspruch 5, wobei
(A) ein Wert des vorbestimmten Luft-Treibstoff-Verhältnisses ausgewählt ist aus einem vorbestimmten Breitenbereich innerhalb einer mageren Seite und einer fetten Seite bezüglich eines Referenzwerts, der von einem stöchiometrischen Luft-Treibstoff-Verhältnis zu der mageren Seite abweicht, wobei der Referenzwert bevorzugt 14,7 ist; und/oder
(B) ein Wert des vorbestimmten Luft-Treibstoffverhältnisses ausgewählt ist aus einem Bereich, der über 14,6 und bis zu 14,8 ist; oder
(C) das vorbestimmte Luft-Treibstoff-Verhältnis einen Wert aufweist, der von einem stöchiometrischen Luft-Treibstoff-Verhältnis zu der mageren Seite abweicht.

7. Katalysatorüberwachungssystem nach Anspruch 5 oder 6, das ferner einen stromabwärtigen Katalysator (16) umfasst, der an einer stromabwärtigen Seite des Katalysators (11) vorgesehen ist und in der Lage ist, zumindest NOx in dem in den stromabwärtigen Katalysators (16) strömenden Abgas zu entfernen,
wobei die Luft-Treibstoff-Verhältnissteuerungseinrichtung die Luft-Treibstoff-Verhältnissteuerung unter der Bedingung ausführt, dass der stromabwärtige Katalysator (16) sich in einem Zustand befindet, in der Lage zu sein, NOx zu entfernen.

8. Katalysatorüberwachungssystem nach einem der Ansprüche 1 bis 7, wobei der Katalysator (11) ein Dreiwegekatalysator ist.

9. Katalysatorüberwachungsverfahren des Bestimmens, ob ein Katalysator (11), der in einem Abgasdurchgangsweg eines Verbrennungsmotors (1) vorgesehen ist und in der Lage ist, zumindest Kohlenwasserstoff in einem in den Katalysator (11) strömenden Abgas zu entfernen, sich verschlechtert hat, das umfasst:
Detektieren oder Schätzen einer Konzentration eines Anteils von Bestandteilen in dem Kohlenwasserstoff in dem in den Katalysator (11) strömenden Abgas;
Detektieren einer Konzentration eines Anteils von Bestandteilen in dem Kohlenwasserstoff in dem aus dem Katalysator (11) strömenden Abgas; **gekennzeichnet durch**
Bestimmen, ob der Katalysator (11) sich verschlechtert hat, basierend auf der Konzentration des Anteils von Bestandteilen in dem in den Katalysator (11) strömenden Kohlenwasserstoff und der Konzentration des Anteils von Bestandteilen in dem aus dem Katalysator (11) strömenden Kohlenwasserstoff, wobei der Anteil von Bestandteilen in dem Kohlenwasserstoff in dem Abgas zumindest eines aus Methan, Ethan und Propan beinhaltet.

10. Katalysatorüberwachungsverfahren nach Anspruch 9, wobei der Anteil von Bestandteilen in dem Kohlenwasserstoff in dem Abgas Methan ist, und wobei vorzugsweise
(A) eine Methankonzentration in dem in den Katalysator (11) strömenden Abgas basierend auf einem Betriebszustand des Verbrennungsmotors (1) geschätzt wird; und
eine Methankonzentration in dem aus dem Katalysator (11) strömenden Abgas durch einen Methansensor (21) detektiert wird; oder
(B) eine Methankonzentration in dem in den Katalysator (11) strömenden Abgas durch einen Methansensor (21) detektiert wird, und
eine Methankonzentration in dem aus dem Katalysator (11) strömenden Abgas durch einen Methansensor (21) detektiert wird.

11. Katalysatorüberwachungsverfahren nach Anspruch 9 oder 10, wobei:
eine Entfernungsrate des Anteils von Bestandteilen in dem in den Katalysator (11) strömenden Kohlenwasserstoff basierend auf der Konzentration des Anteils von Bestandteilen in dem in den Katalysator (11) strömenden Kohlenwasserstoff und der Konzentration des Anteils von Bestandteilen in dem aus dem Katalysator (11) strömenden Kohlenwasserstoff berechnet wird, und
es basierend auf der Entfernungsrate bestimmt wird, ob der Katalysator (11) sich verschlechtert hat.

12. Katalysatorüberwachungsverfahren nach einem der Ansprüche 9 bis 11, das ferner das Steuern eines Luft-Treibstoff-Verhältnisses des in den Katalysator (11) strömenden Abgases auf ein vorbestimmtes Luft-Treibstoff-Verhältnis umfasst, wenn die Konzentration des Anteils von Bestandteilen in dem in den Katalysator (11) strömenden Kohlenwasserstoff zu detektieren oder zu schätzen ist, und wenn die Konzentration des Anteils vom Bestandteil in dem aus dem Katalysator (11) strömenden Kohlenwasserstoff zu detektieren ist; wobei
(A) ein Wert des vorbestimmten Luft-Treibstoff-Verhältnisses aus einem vorbestimmten Breitenbereich innerhalb einer mageren Seite und einer fetten Seite bezüglich eines Referenzwerts, der von einem stöchiometrischen Luft-Treibstoff-Verhältnis in Richtung der mageren Seite abweicht, ausgewählt werden kann; oder
(B) das vorbestimmte Luft-Treibstoff-Verhältnis einen Wert aufweisen kann, der von einem stöchiometrischen Luft-Treibstoff-Verhältnis zu einer mageren Seite abweicht; und/oder
(C) das Katalysatorüberwachungsverfahren ferner das Bereitstellen eines stromabwärtigen Katalysators (16) umfasst, der auf einer stromabwärtigen Seite des Katalysators (11) angeordnet ist, und der in der Lage ist, zumindest NOx in dem in den stromabwärtigen Katalysator (16) strömenden Abgas zu entfernen,
wobei die Steuerung des Luft-Treibstoff-Verhältnisses unter der Bedingung ausgeführt wird, dass der stromabwärtige Katalysator (16) in einem Zustand sei, in der Lage zu sein, NOx zu entfernen.

13. Katalysatorüberwachungsverfahren nach einem der Ansprüche 9 bis 12, wobei der Katalysator (11) ein Dreiwegekatalysator ist.

## Revendications

1. Système de contrôle de catalyseur comprenant :
un catalyseur (11) placé dans un passage d'échappement d'un moteur à combustion interne (1) et pouvant enlever au moins des hydrocarbures dans un gaz d'échappement s'écoulant dans le catalyseur (11) ;
des premiers moyens de détection de concentration pour détecter ou estimer une concentration d'une partie des composants hydrocarbures dans le gaz d'échappement s'écoulant dans le catalyseur (11) ;
des seconds moyens de détection de concentration (21) pour détecter une concentration de la partie des composants hydrocarbures dans le gaz d'échappement s'écoulant hors du catalyseur (11) ; **caractérisé en ce que**
des moyens de détermination de détérioration pour déterminer si le catalyseur (11) a été détérioré en se basant sur la concentration de la partie des composants hydrocarbures s'écoulant dans le catalyseur (11) et la concentration de la partie des composants hydrocarbures s'écoulant hors du catalyseur (11), dans lequel
la partie des composants hydrocarbures dans le gaz d'échappement inclut au moins du méthane, de l'éthane et du propane.

2. Système de contrôle de catalyseur selon la revendication 1, dans lequel la partie des composants hydrocarbures dans le gaz d'échappement est du méthane.

3. Système de contrôle de catalyseur selon la revendication 2, dans lequel :
(A) les premiers moyens de détection de concentration incluent des moyens d'estimation de concentration en méthane pour estimer une concentration en méthane dans le gaz d'échappement s'écoulant dans le catalyseur (11) en se basant sur un état de fonctionnement d'un moteur à combustion interne (1), et
les seconds moyens de détection de concentration (21) incluent un capteur de méthane (21),
dans lequel l'état de fonctionnement du moteur à combustion interne (1) peut être au moins l'un d'une vitesse de rotation, une quantité d'air admis, et une température d'eau de refroidissement ; ou
(B) les premiers moyens de détection de concentration et les seconds moyens de détection de concentration (21) incluent un capteur de méthane (21).

4. Système de contrôle de catalyseur selon l'une quelconque des revendications 1 à 3, dans lequel les moyens de détermination de détérioration calculent un taux d'enlèvement de la partie des composants hydrocarbures dans le gaz d'échappement s'écoulant dans le catalyseur (11) en se basant sur la concentration de la partie des composants hydrocarbures s'écoulant dans le catalyseur (11) et la concentration de la partie des composants hydrocarbures dans le gaz d'échappement s'écoulant hors du catalyseur (11), et détermine si le catalyseur (11) a été détérioré en se basant sur le taux d'enlèvement ;
et de préférence les moyens de détermination de détérioration comparent le taux d'enlèvement avec un critère quantitatif de détérioration qui est obtenu à partir d'une fonction de la température du catalyseur (11), et détermine que le catalyseur (11) a été détérioré si le taux d'enlèvement est inférieur ou égal au critère quantitatif de détérioration.

5. Système de contrôle de catalyseur selon l'une quelconque des revendications 1 à 4, comprenant en outre des moyens de commande de rapport air-combustible pour commander le rapport air-combustible du gaz d'échappement s'écoulant dans le catalyseur (11) à un rapport air-combustible prédéterminé quand la concentration de la partie des composants hydrocarbures est détectée ou estimée par les premiers moyens de détection de concentration et quand la concentration de la partie des composants hydrocarbures est détectée par les seconds moyens de détection de concentration (21).

6. Système de contrôle de catalyseur selon la revendication 5, dans lequel
(A) la valeur du rapport air-combustible prédéterminé est sélectionnée dans une plage de largeur prédéterminée dans un côté pauvre et un côté riche par rapport à une valeur de référence qui est dérivée d'un rapport air-combustible stoechiométrique vers le côté pauvre, dans lequel la valeur de référence est de préférence 14,7 ; et/ou
(B) une valeur du rapport air-combustible est sélectionnée dans une plage qui est au-dessus de 14,6 et jusqu'à 14,8 : ou
(C) le rapport air-combustible prédéterminé a une valeur qui est dérivée d'un rapport air-combustible stoechiométrique vers le côté pauvre.

7. Système de contrôle de catalyseur selon la revendication 5 ou 6, comprenant en outre un catalyseur aval (16) placé sur un côté aval du catalyseur (11) et pouvant enlever au moins des NOx dans le gaz d'échappement s'écoulant dans le catalyseur aval (16),
dans lequel les moyens de commande de rapport air-combustible exécutent la commande de rapport air-combustible à condition que le catalyseur aval (16) soit dans un état de pouvoir enlever des NOx.

8. Système de contrôle de catalyseur selon l'une quelconque des revendications 1 à 7, dans lequel le catalyseur (11) est un catalyseur trois voies.

9. Procédé de contrôle de catalyseur consistant à déterminer si un catalyseur (11) placé dans un passage d'échappement d'un moteur à combustion interne (1) et pouvant enlever au moins des hydrocarbures dans un gaz d'échappement s'écoulant dans le catalyseur (11) été détérioré, comprenant ;
de détecter ou estimer une concentration d'une partie des composants hydrocarbures dans le gaz d'échappement s'écoulant dans le catalyseur (11) ;
de détecter une concentration de la partie des composants hydrocarbures dans le gaz d'échappement s'écoulant hors du catalyseur (11) ; **caractérisé par**
déterminer si le catalyseur (11) a été détérioré en se basant sur la concentration de la partie des composants hydrocarbures s'écoulant dans le catalyseur (11) et la concentration de la partie des composants hydrocarbures s'écoulant hors du catalyseur (11), dans lequel la partie des composants hydrocarbures dans le gaz d'échappement inclut au moins du méthane, de l'éthane et du propane.

10. Procédé de contrôle de catalyseur selon la revendication 9, dans lequel la partie des composants hydrocarbures dans le gaz d'échappement est du méthane, et dans lequel de préférence
(A) une concentration en méthane dans le gaz d'échappement s'écoulant dans le catalyseur (11) est estimée en se basant sur un état de fonctionnement d'un moteur à combustion interne (1), et
une concentration en méthane dans le gaz d'échappement s'écoulant hors du catalyseur (11) est détectée par un capteur de méthane (21) ; ou
(B) une concentration en méthane dans le gaz d'échappement s'écoulant dans le catalyseur (11) est détectée par un capteur de méthane (21), et
une concentration en méthane dans le gaz d'échappement s'écoulant hors du catalyseur (11) est détectée par un capteur de méthane (21).

11. Procédé de contrôle de catalyseur selon la revendication 9 ou 10, dans lequel :
un taux d'enlèvement de la partie des composants hydrocarbures s'écoulant dans le catalyseur (11) est calculé en se basant sur la concentration de la partie des composants hydrocarbures s'écoulant dans le catalyseur (11) et la concentration de la partie des composants hydrocarbures s'écoulant hors du catalyseur (11), et
il est déterminé si le catalyseur (11) a été détérioré en se basant sur le taux d'enlèvement.

12. Procédé de contrôle de catalyseur selon l'une quelconque des revendications 9 à 11, comprenant en outre de commander le rapport air-combustible du gaz d'échappement s'écoulant dans le catalyseur (11) à un rapport air-combustible prédéterminé quand la concentration de la partie des composants hydrocarbures s'écoulant dans le catalyseur (11) doit être détectée ou estimée et quand la concentration de la partie des composants hydrocarbures s'écoulant hors du catalyseur (11) doit être détectée ; dans lequel
(A) une valeur du rapport air-combustible prédéterminé peut être sélectionnée dans une plage de largeur prédéterminée dans un côté pauvre et un côté riche par rapport à une valeur de référence qui est dérivée d'un rapport air-combustible stoechiométrique vers le côté pauvre ; ou
(B) le rapport air-combustible prédéterminé peut avoir une valeur qui est dérivée d'un rapport air-combustible stoechiométrique vers le côté pauvre ; et/ou
(C) le procédé de contrôle de catalyseur comprend en outre de fournir un catalyseur aval (16) qui est disposé sur un côté aval du catalyseur (11) et peut enlever au moins des NOx dans le gaz d'échappement s'écoulant dans le catalyseur aval (16),
dans lequel la commande du rapport air-combustible est exécutée à condition que le catalyseur aval (16) soit dans un état de pouvoir enlever des NOx.

13. Procédé de contrôle de catalyseur selon l'une quelconque des revendications 9 à 12, dans lequel le catalyseur (11) est un catalyseur trois voies.
